# EUROPÄISCHE PATENTSCHRIFT

(11) **EP 1 982 875 B1**
(45) Veröffentlichungstag und Bekanntmachung des Hinweises auf die Patenterteilung: **02.01.2013**
(21) Anmeldenummer: 08007533.6
(22) Anmeldetag: 17.04.2008
(51) Int. Cl.: B60R 22/34, B60R 22/38

(54) **Gurtaufroller für einen Fahrzeugsicherheitsgurt**
Belt roller for an automobile seatbelt
Enrouleur de ceinture pour une ceinture de sécurité de véhicule

(30) Priorität: 17.04.2007 DE 102007018086
(43) Veröffentlichungstag der Anmeldung: 22.10.2008
(73) Patentinhaber: HS Products Engineering GmbH, 82239 Alling (DE)
(72) Erfinder: Ziegenbein, Werner, 81919 München (DE)
(74) Vertreter: Patentanwälte Bals & Vogel

(56) Entgegenhaltungen:
- DE-A1- 19 732 878
- DE-B3-102005 016 822
- DE-B4- 19 950 855
- DE-U1- 29 912 154
- GB-A- 2 345 891
- US-A- 2 982 492

## Beschreibung

Die Erfindung betrifft einen Fahrzeugsicherheitsgurt nach dem Oberbegriff des Patentanspruches 1.

Ein derartiger aus DE 199 50 855 B4 bekannter Gurtaufroller beinhaltet eine mit einem Gurtband des Sicherheitsgurtes verbundene Wickelwelle, welche in einem am Fahrzeug zu befestigenden Rahmen drehbar gelagert ist. Das Gurtband des Sicherheitsgurtes kann auf die Wickelwelle auf- und von dieser abgewickelt werden. Die Wickelwelle besteht aus zwei Wellenteilen, von denen der eine Wellenteil mittels einer Blockiereinrichtung gegen Weiterdrehung am Rahmen blockierbar ist und ein zweiter Wellenteil drehbar bleibt, wobei zwischen die beiden Wellenteile ein Kraftbegrenzer in Form eines Torsionsstabes geschaltet ist. Ferner kann über ein Getriebe eine aus mindestens einem Massekörper bestehende Trägheitsmasse an den zweiten Spulenteil angekoppelt werden. Die über die Kupplung angekoppelte Trägheitsmasse wirkt bei der Vorverlagerung der angegurteten Person, beispielsweise infolge eines Unfalls, als Reaktionskraft auf das sich drehende Wellenteil, von welchem das Gurtband abgezogen wird. Diese sich hinzuaddierende Reaktionskraft wirkt als variable sich hinzuaddierende Bremskraft in Abhängigkeit von der Unfallschwere und dem Körpergewicht und -größe der angegurteten Person (5%-Frau bis zu 95%-Mann). Die deutsche Patentschrift DE 10 2005 016 822 B3 beschreibt eine Kraftbegrenzungseinheit für ein Kraftfahrzeug. Bei diesem wird ein Massesystem in Schwingung versetzt, welches die Bewegung eines sich bewegenden Teils mit einer frequenzbedingt definierten Geschwindigkeit steuert.

Aufgabe der Erfindung ist es, einen Gurtaufroller der eingangs genannten Art zu schaffen, bei dem ebenfalls ein Kraftbegrenzer mit an die Unfallschwere und die Körpergröße bzw. das Körpergewicht angepasstem Kraftniveau der Kraftbegrenzung mit anderen Mitteln als beim Stand der Technik selbsttätig erreicht wird.

Diese Aufgabe wird erfindungsgemäß durch die Merkmale des Patentanspruches 1 gelöst, wobei in den Unteransprüchen vorteilhafte Weiterbildungen der Erfindung angegeben sind.

Bei der Erfindung ist der Energieabsorber als wenigstens eine schwingfähige Masse aufweisendes schwingendes System ausgebildet, wobei die wenigstens eine schwingfähige Masse zur Erzeugung erzwungener Schwingungen bei erhöhter Beschleunigung oder Abbremsung, beispielsweise einem Unfall (Crash) mit der Wickelwelle in Antriebsverbindung steht. Die Antriebsverbindung kann ständig, d.h. auch im Normalbetrieb oder durch eine Kupplung bei überhöhter Beschleunigung der Drehzahl der Wickelwelle vorgesehen sein. In vorteilhafter Weise ist das schwingende System so ausgebildet, dass bei einer bestimmten Bandauszugsgeschwindigkeit das schwingende System in Resonanznähe oder in Resonanz schwingt. Dadurch ist es möglich, dass nach einem Einschwingvorgang bei Erreichen der Resonanznähe oder bei Erreichen der Resonanz des schwingenden Systems die Bandauszugsgeschwindigkeit bei unterschiedlichen Unfallschweren und unterschiedlichen Körpergewichten und -größen der angegurteten Personen sich nur gering voneinander unterscheiden. Im schwingenden System kann die schwingfähige Masse eine etwa translatorische oder etwa rotatorische Bewegung ausführen. Im schwingenden System wirkt auf die schwingfähige Masse vorzugsweise eine federelastische Rückstellkraft. Hierzu kann die schwingfähige Masse in einer federelastischen Lagerung gelagert sein oder eine federelastische Verbindung mit der Wickelwelle aufweisen. Die schwingfähige Masse kann aus einem federelastischen Material bestehen.

Zwischen der Wickelwelle, insbesondere zwischen dem drehbaren Wellenteil und der wenigstens einen schwingfähigen Masse kann ein Getriebe, insbesondere ein ins Schnelle übersetzendes Getriebe als Antriebsverbindung vorgesehen sein. Hierdurch lässt sich die Einschwingzeit bis zur Resonanznähe oder bis zur Resonanz des schwingenden Systems verkürzen. In bevorzugter Weise werden die Schwingungen der wenigstens einen schwingenden Masse gedämpft. Dies kann dadurch erfolgen, dass im schwingenden System auf die wenigstens eine schwingende Masse bzw. auf die sich bewegenden Massen eine Bremswirkung ausgeübt wird.

Vorzugsweise ist die schwingfähige Masse als Drehkörper, insbesondere unwuchtiger Drehkörper ausgebildet. Beim Gurtbandauszug wird auf den Drehkörper ein Drehmoment übertragen, wobei mit Hilfe des ins Schnelle übersetzenden Getriebes die Drehzahl des bei seiner Drehung schwingenden Drehkörpers in die Nähe oder in seinen Resonanzbereich kommt. Das schwingende System verbraucht dabei Energie, wobei in der Nähe oder im Resonanzbereich die Drehzahl des Drehkörpers eine Endgeschwindigkeit erreicht, welche sowohl für leichte als auch für schwere Insassen als auch für unterschiedliche Crashschweren etwa im gleichen Bereich liegt.

Bei einem translatorisch schwingenden System kann die Drehbewegung der Wickelwelle und insbesondere des drehbaren Wellenteils, beispielsweise über eine Kurbel auf die wenigstens eine schwingfähige Masse übertragen werden. Im Resonanzbereich oder in der Nähe des Resonanzbereiches wird dann ebenfalls eine etwa gleiche Bandauszugsgeschwindigkeit für unterschiedliche Crashschweren und unterschiedliche angegurtete Insassen erreicht.

Zur Erzielung der Dämpfung oder Bremswirkung im schwingenden System können auf die wenigstens eine sich bewegende Masse des schwingenden Systems Bremsflächen wirken, wobei an wenigstens einer sich bewegenden Massen und/oder an einer Rahmen- oder Gehäuseinnenseite beim Schwingen aneinanderliegenden Bremsflächen vorgesehen sein können.

Als Getriebe zur Übertragung der Drehbewegung von der Wickelwelle auf die wenigstens eine schwingfähige Masse, welche insbesondere als Drehkörper ausgebildet ist, eignet sich ein Zahnradgetriebe, insbesondere Planetengetriebe.

Anhand der Figuren wird an Ausführungsbeispielen die Erfindung noch näher erläutert.

Es zeigt
- Fig. 1: ein erstes Ausführungsbeispiel der Erfindung;
- Fig. 2A und 2B: zweite und dritte Ausführungsbeispiele der Erfindung;
- Fig. 3: ein viertes Ausführungsbeispiel der Erfindung;
- Fig. 4: eine Kurvendarstellung zur Erläuterung der Erfindung;
- Fig. 5: Kurvendarstellungen zur Erläuterung der Erfindung; und
- Fig. 6 und 7: Ausführungsbeispiele für Kupplungen mit Freilaufwirkung zum Ankuppeln und Trennen der Wickelwelle von dem schwingenden System.

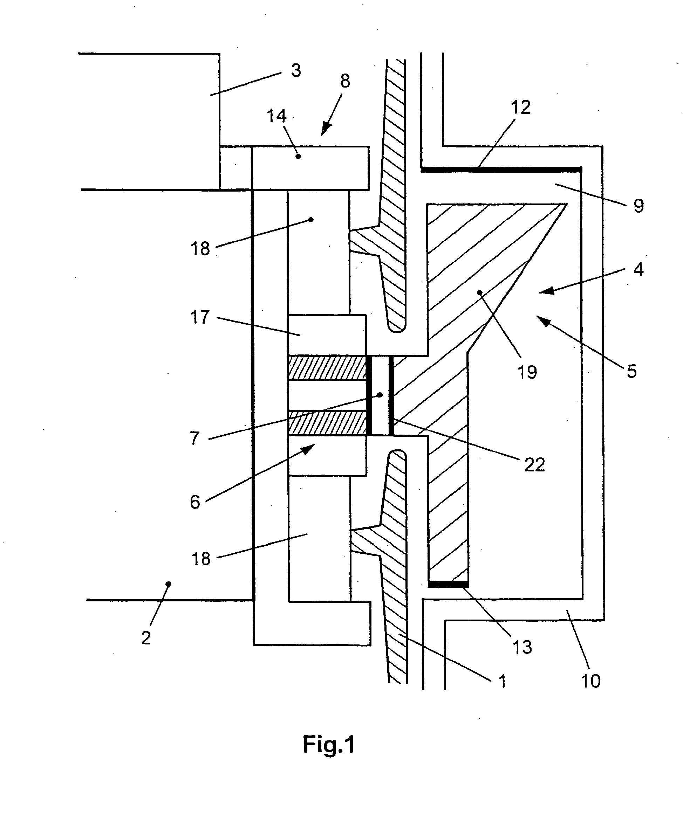

Die Fig. 1 zeigt in schematischer Darstellung einen Teil eines Gurtaufrollers für einen Fahrzeugsicherheitsgurt. An einem Rahmen 1, welcher am Fahrzeugaufbau zu befestigen ist, ist eine Wickelwelle 2 drehbar gelagert. Ein Gurtband 3 des Sicherheitsgurtes kann auf die Wickelwelle aufgewickelt und von der Wickelwelle abgewickelt werden. Mit der Wickelwelle 2 ist ein Energieabsorber 4 in Antriebsverbindung. Der Energieabsorber 4 beinhaltet als schwingfähige Masse 5 einen Drehkörper 19, welcher beim dargestellten Ausführungsbeispiel als unwuchtiger Drehkörper ausgebildet ist. Zur Ausbildung des Energieabsorbers 4 als schwingendes System kann der Drehkörper 19 an einer federelastischen Verbindungsstelle 7 oder in einem federelastischen Lager gelagert sein, welche beim Schwingen der Masse 5 des Drehkörpers 19 eine federelastische Rückstellkraft 6 bildet.

Die Drehbewegung der Wickelwelle 2 wird über ein Getriebe 8, welches beim dargestellten Ausführungsbeispiel als Planetengetriebe ausgebildet ist, übertragen. Durch dieses Planetengetriebe wird eine kompakte Anordnung erreicht.

Das Planetengetriebe besteht aus einem drehfest mit der Wickelwelle 2 verbundenen Hohlrad 14, welches mit am Rahmen 1 drehbar gelagerten Planetenrädern 18 kämmt. Mit den Planetenrädern 18 kämmt ein Sonnenrad 17, das in Drehantriebsverbindung mit dem Drehteil 19 steht. Die federelastische Rückstellkraft 6 kann, wie schon erläutert, durch die federelastische Verbindungsstelle 7 erreicht werden, welche beim dargestellten Ausführungsbeispiel zwischen dem Sonnenrad 17 und dem Drehkörper 19 vorgesehen ist.

Zwischen dem Drehkörper 19 und der Wickelwelle 2 kann ferner eine Kupplung vorgesehen sein, welche nur dann eingerückt ist, wenn der Crashfall eintritt und die Wickelwelle beim Auszug des Gurtbandes 3 mit hoher Beschleunigung gedreht wird. Diese Kupplung kann beim dargestellten Ausführungsbeispiel beispielsweise zwischen dem Sonnenrad 17 und dem Drehkörper 19 vorgesehen sein.

Die Wickelwelle 2 kann aus einem Stück bestehen oder zweiteilig ausgebildet sein, wobei ein Teil am Rahmen 1 blockierbar ist und der andere mit dem Hohlrad 14 verbundene Wellenteil drehbar bleibt.

Der Drehkörper 19 befindet sich in einem am Rahmen 1 befestigten, insbesondere angeflanschten Gehäuse 10. An der Innenseite des Gehäuses 10 ist eine Bremsfläche 12, welche vorzugsweise als durchgehende Bremsfläche ausgebildet ist, vorgesehen. Ferner kann an der Umfangsfläche des Drehkörpers 19 eine Bremsfläche 13 vorgesehen sein. Bei der Drehung des Drehkörpers 19 kommen infolge der durch die überhöhte Auszugsbeschleunigung des Gurtbandes 3 und der hieraus resultierenden Drehzahl des Drehkörpers 19 schwingende Auslenkungen in radialen Richtungen des unwuchtigen Drehkörpers 19 zustande, bei denen die Bremsflächen 12 und 13 miteinander in Berührung kommen. Das Getriebe 8 ist zur Erzielung der erforderlichen Drehzahl des Drehkörpers 19 als ins Schnelle übersetzendes Getriebe vorzugsweise ausgebildet. Anstelle des in der Fig. 1 dargestellten Planetengetriebes kann auch ein anderes Zahnradgetriebe, welches ins Schnelle übersetzt, vorgesehen sein.

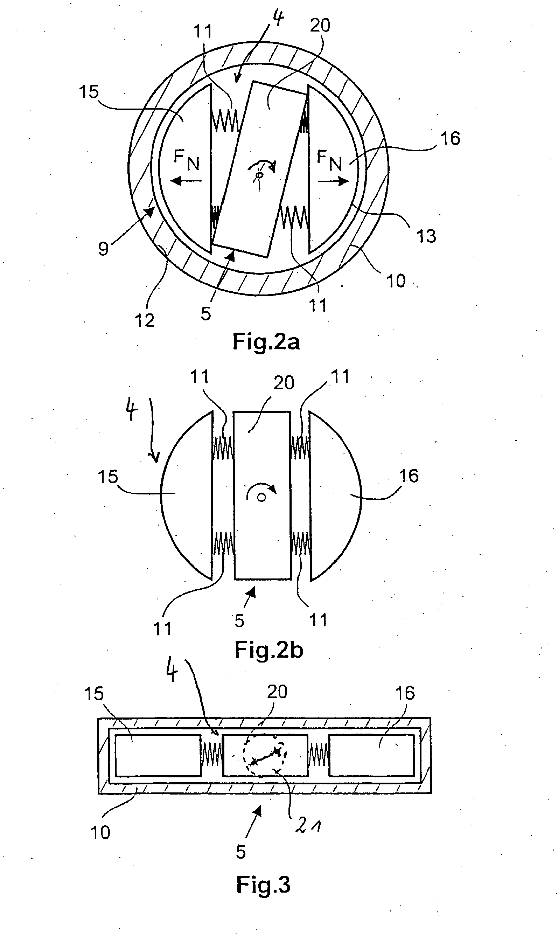

In den Fig. 2A und 2B sind mehrteilige schwingfähige Massen 5 dargestellt. Die schwingfähigen Massen 5 bestehen bei den dargestellten Ausführungsbeispielen aus drei Körpern 15, 16, 20, welche über Federn 11 miteinander verbunden sind. Zwischen zwei teilkreisförmige Querschnitte aufweisenden Körpern ist ein dritter Körper 20 mit etwa rechteckigem Querschnitt angeordnet, der über das Getriebe 8 mit der Wickelwelle 2 in Drehantriebsverbindung steht. Die jeweilige dreiteilige Masse 5 ist drehbar im Gehäuse 10 gelagert. Beim Ausführungsbeispiel der Fig. 2A sind die beiden außenliegenden Körper 15, 16 jeweils über eine Feder 11 mit dem mittleren Körper 20 verbunden. Die Verbindungsstellen der Federn 11 liegen an diametralen Enden der miteinander verbundenen Körper. Beim Ausführungsbeispiel der Fig. 2B sind die beiden äußeren Körper 15, 16 über jeweils zwei Federn 11 mit dem mittleren Körper 20 verbunden. Die federelastische Verbindung zwischen den drei Körpern 15, 16 und 20 kann auch mit mehr Federn oder anderen federelastischen Mitteln, beispielsweise federelastischen Einlagen zwischen den Körpern erfolgen. Wie beim Ausführungsbeispiel der Fig. 1 kann die Innenfläche des Gehäuses 10 mit einer Bremsfläche oder einem Bremsbelag 12 ausgestattet sein. Ferner können auf den außenliegenden Umfangsflächen der äußeren Körper 15, 16 Bremsflächen 13 vorgesehen sein.

Die Verbindung zwischen dem mittleren Körper 20 und dem Getriebe 8 kann starr oder, wie in Fig. 1, über die federelastische Verbindungsstelle 7 oder Drehlagerung erfolgen. Bei den Ausführungsbeispielen der Fig. 2A und 2B wird der einteilige Drehkörper, welcher die schwingfähige Masse 5 bildet, ersetzt durch die mehrteilige schwingfähige Masse 5, welche aus den drei über Federn 11 miteinander verbundenen Körpern 15, 16 und 20 besteht und ebenfalls drehbar im Gehäuse 10 angeordnet ist.

Bei dem in Fig. 3 dargestellten Ausführungsbeispiel ist ebenfalls eine aus mehreren Körpern 15, 16 und 20 gebildete schwingfähige Masse 5 vorgesehen, wobei die außenliegenden Körper 15, 16 über Federn 11 mit dem dazwischenliegenden mittleren Körper 20 verbunden sind. Anstelle der jeweiligen einen Feder 11 können die schwingfähigen Körper auch über mehrere Federn oder über jeweilige federelastische Zwischenlagen miteinander verbunden sein. Bei dem in der Fig. 3 dargestellten Ausführungsbeispiel führt die mehrteilige schwingfähige Masse 5 eine translatorische Bewegung im Gehäuse 10 aus. Die Drehbewegung der Wickelwelle 2 wird über einen Kurbeltrieb 21 auf den mittleren Körper 20 in eine translatorische Bewegung gewandelt. Die drei schwingfähigen Körper 15, 16 und 20 sind nach Art von Kolben im Gehäuse 10 für translatorisch schwingende Hin- und Herbewegungen geführt.

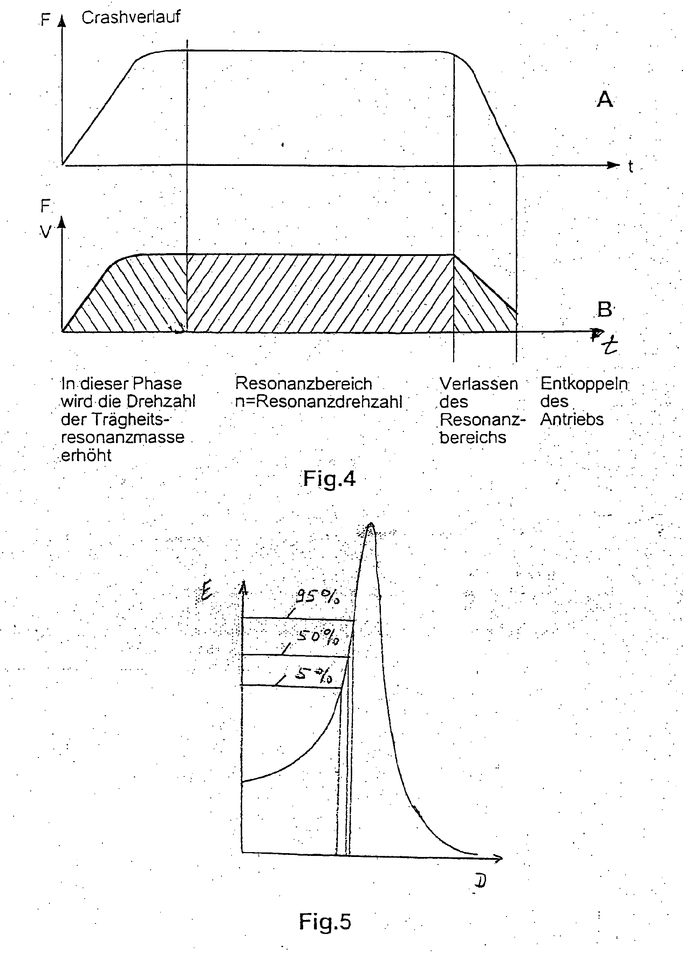

Anhand der Figuren 4 und 5 wird die energieabsorbierende Wirkung der Ausführungsbeispiele erläutert. In Fig. 4 ist der zeitliche Kraftverlauf, welcher am Gurtband 3 des Sicherheitsgurtes während eines Unfalls (Crash) wirkt, dargestellt. Dieser Kraftverlauf ergibt sich aus der Vorverlagerung des angegurteten Fahrzeuginsassen, welche aus der beim Unfall wirkenden erhöhten Abbremsung oder Beschleunigung am Fahrzeug resultiert. In der ersten Phase des zeitlichen Kraftverlaufs wird beim Abziehen des Gurtbandes die Wickelwelle 2 oder der drehbare Wellenteil der Wickelwelle 2 mit steigender Drehzahl gedreht und diese Drehung wird über das Getriebe 8 auf die schwingfähige Masse mit steigender Drehzahl übertragen. Dabei kommt das schwingungsfähige System bestehend aus der einteiligen oder mehrteiligen schwingfähigen Masse 5 und der von der federelastischen Drehlagerung 7 (Fig. 1) oder den Federn 11 (Fig. 2, 3) gebildeten federelastischen Rückstellkraft 6 in die Nähe des Resonanzbereichs oder in den Resonanzbereich des schwingenden Systems. In diesem Frequenzbereich verbrauchen die erzwungenen Schwingungen des schwingenden Systems die aus dem eingespeisten Drehmoment resultierende Energie. Durch die bei den Schwingungen aneinander gleitenden Bremsflächen 12, 13 wird bei den Ausfüh-rungsbeispielen jeweils eine Bremse 9 geschaffen, die auf die Schwingungsamplituden dämpfend wirkt. Während der Vorverlagerung des Fahrzeuginsassen wirkt somit das schwingende System als Energieabsorber und bremsend auf die Vorverlagerung.

Wie aus der in Fig. 5 dargestellten Leistungsresonanzkurve zu ersehen ist, ändert sich im Resonanzbereich bei eingespeisten unterschiedlichen Energien die Frequenz und damit die Drehzahl der an das schwingende System gekoppelten Wickelwelle 2 nur geringfügig. Hieraus resultiert das die Vorverlagerungsgeschwindigkeit eines angegurteten 95%-Mannes nur geringfügig größer ist als die Vorverlagerungsgeschwindigkeit einer 5%-Frau.

Durch die Erfindung wird somit ein Energieabsorber geschaffen, welcher selbsttätig die Vorverlagerungsgeschwindigkeit der angegurteten Person auf eine bestimmte Geschwindigkeit einstellt, wobei diese Vorverlagerungsgeschwindigkeit an das Auslösen eines oder mehrerer zugeordneter Airbags und das Aufnehmen der vorverlagerten Person vom jeweils gefüllten Airbag abgestimmt werden kann.

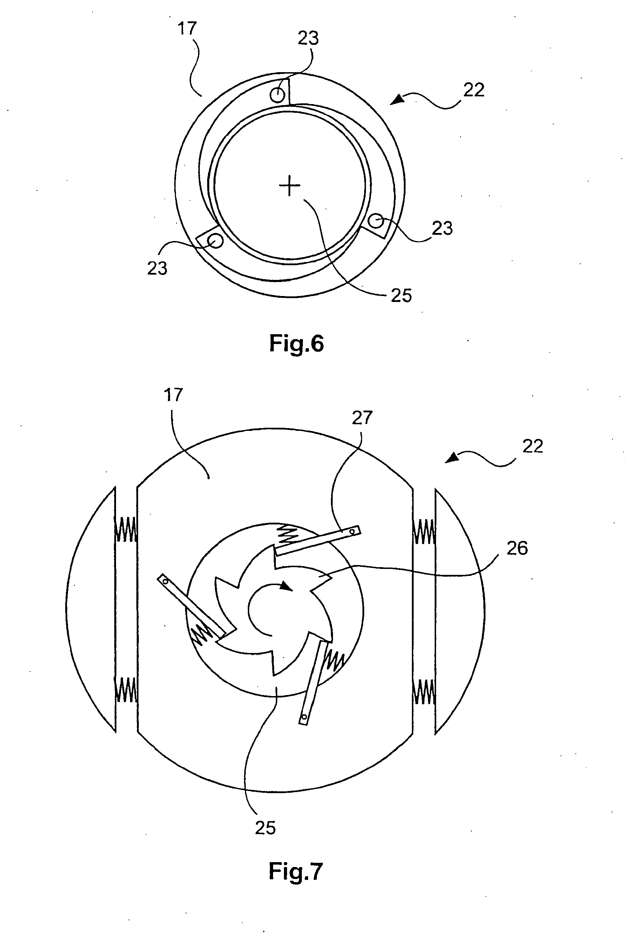

Um am Ende des Crashverlaufs ein durch die Bewegung, insbesondere Drehung der schwingfähigen Masse verursachtes Weiterdrehen der Wickelwelle 2 zu verhindern, ist in bevorzugter Weise zwischen der Wickelwelle 2 und dem schwingenden System, insbesondere den drehenden Teilen des schwingenden Systems (Drehkörper 19 und mittlerer Körper 20) ein Freilauf 22 vorgesehen. Dieser Freilauf kann, wie es schematisch in den Figuren 6 und 7 dargestellt ist, ausgebildet sein. Bei dem in Fig. 6 dargestellten Ausführungsbeispiel werden Kugeln 23 entlang schräger Flächen 24, beispielsweise an einem Innenumfang des Sonnenrades 17 aus strichliert dargestellten Positionen, in denen eine Drehmomentübertragung erfolgt, in Freilaufpositionen gebracht, welche in ausgezogenen Linien in Fig. 6 dargestellt sind. Bei der Drehmomentübertragung wird das Drehmoment auf einen Wellenstummel 25 übertragen, welcher über die federelastische Verbindungsstelle 7 mit dem Drehkörper 19 oder dem mittleren Körper 20 verbunden ist. Beim Ausführungsbeispiel der Fig. 7 ist am Wellenstummel 25 eine Verzahnung 26 vorgesehen, in deren Zähne federbelastete Klauen 27, welche an einem Innenumfang des Sonnenrades 17 abgestützt sind, eingreifen. Bei der Drehung entgegen dem Uhrzeigersinn erfolgt die Drehmomentübertragung und am Ende des Crashverlaufs dreht der Wellenstummel 25 weiter, wobei der Klaueneingriff aus der Verzahnung 26 gelöst wird.

Beim Kurbeltrieb 21 des Ausführungsbeispiels der Fig. 3 ist der Freilauf zwischen dem Drehteil (Exzenter) des Kurbeltriebes und dem Sonnenrad 17 vorgesehen.

### Bezugszeichenliste

- 1: Rahmen
- 2: Wickelwelle
- 3: Gurtband
- 4: Energieabsorber
- 5: schwingfähige Masse
- 6: federelastische Rückstellkraft
- 7: federelastische Verbindung
- 8: Getriebe (Planetengetriebe)
- 9: Bremse
- 10: Gehäuse
- 11: Federn
- 12: Bremsfläche
- 13: Bremsfläche
- 14: Hohlrad
- 15: schwingfähiger Körper
- 16: schwingfähiger Körper
- 17: Sonnenrad
- 18: Planetenräder
- 19: Drehkörper (unwuchtiger Drehkörper)
- 20: mittlerer Körper
- 21: Kurbeltrieb
- 22: Freilauf
- 23: Kugeln
- 24: schräge Flächen
- 25: Wellenstummel
- 26: Verzahnung
- 27: federbelastete Klauen

## Patentansprüche

1. Gurtaufroller für einen Fahrzeugsicherheitsgurt mit einer in einem Rahmen drehbar gelagerten Wickelwelle, mit welcher ein auf- und abzuwickelndes Gurtband des Sicherheitsgurtes verbunden ist, und einem mit der Wickelwelle (2) verbundenen oder zu verbindendem Energieabsorber, mit welchem bei auf einen angegurteten Fahrzeuginsassen einwirkender überhöhter Beschleunigung oder Abbremsung ein Gurtbandauszug mit Energieabsorption erreicht wird, wobei der Energieabsorber (4) als ein wenigstens eine schwingfähige Masse (5) aufweisendes schwingendes System (5, 6) ausgebildet ist, dessen wenigstens eine schwingfähige Masse (5) zur Erzeugung erzwungener Schwingungen mit der Wickelwelle (3) in Antriebsverbindung steht oder bei auf den angegurteten Fahrzeuginsassen einwirkender erhöhter Beschleunigung oder Abbremsung in Antriebsverbindung zu bringen ist und dass das schwingende System (5, 6) bei einer bestimmten Bandauszugsgeschwindigkeit in Resonanznähe oder in Resonanz schwingt, und
das schwingende System (5, 6) in einem Gehäuse (10), welches an einer Seite des Rahmens (1) befestigt ist, angeordnet ist,
**dadurch gekennzeichnet, dass** an der Innenseite des Gehäuses (10) eine Bremsfläche (12) zum Bremsen der Bewegung der wenigstens einer schwingfähigen Masse (5) vorgesehen ist.

2. Gurtaufroller nach Anspruch 1 , **dadurch gekennzeichnet, dass** die schwingfähige Masse (5) eine etwa translatorische oder rotatorische Bewegung bei den durch den Antrieb der Wickelwelle erzwungenen Schwingungen ausführt.

3. Gurtaufroller nach einem der Ansprüche 1 bis 2, **dadurch gekennzeichnet, dass** auf die wenigstens eine schwingungsfähige Masse (5) eine federelastische Rückstellkraft (6) wirkt.

4. Gurtaufroller nach einem der Ansprüche 1 bis 3, **dadurch gekennzeichnet, dass** die wenigstens eine schwingfähige Masse (5) einteilig ausgebildet ist und in einer federelastischen Verbindungsstelle (7) zur Wickelwelle (2) oder einem federelastischen Lager schwingfähig gelagert ist.

5. Gurtaufroller nach einem der Ansprüche 1 bis 4, **dadurch gekennzeichnet, dass** die schwingfähige Masse (5) aus mehreren Körpern (15, 16, 20) besteht, die federelastisch gegeneinander abgestützt sind.

6. Gurtaufroller nach einem der Ansprüche 1 bis 5, **dadurch gekennzeichnet, dass** zwischen Wickelwelle (2) und der wenigstens einen schwingfähigen Masse (5) ein Getriebe (8), insbesondere ein ins Schnelle übersetzendes Getriebe als Antriebsverbindung vorgesehen ist.

7. Gurtaufroller nach Anspruch 6, **dadurch gekennzeichnet, dass** das Getriebe als Zahnrad-, insbesondere Planetengetriebe für die eine schwingende rotatorische Bewegung ausführende Masse (5) ausgebildet ist.

8. Gurtaufroller nach einem der Ansprüche 1 bis 7, **dadurch gekennzeichnet, dass** die Schwingung der wenigstens einen schwingfähigen Masse (5) gedämpft ist.

9. Gurtaufroller nach einem der Ansprüche 1 bis 8, **dadurch gekennzeichnet, dass** eine auf die schwingenden Bewegungen der schwingfähigen Masse (5) wirkende Bremse (9) vorgesehen ist.

10. Gurtaufroller nach Anspruch 6, **dadurch gekennzeichnet, dass** die schwingfähige rotatorische Masse (5) aus drei Masseteilen besteht, von denen zwei einen teilkreisförmigen Querschnitt aufweisen und federnd gegenüber einem dazwischen angeordneten Drehteil (20) abgestützt sind.

11. Gurtaufroller nach Anspruch 10, **dadurch gekennzeichnet, dass** an den teilkreisförmigen Umfangsflächen der abgestützten Massekörper (15, 16) Bremsflächen (12, 13) wirken.

12. Gurtaufroller nach einem der Ansprüche 1 bis 11, **dadurch gekennzeichnet, dass** die schwingfähige Masse (5) als Drehkörper, insbesondere unwuchtiger Drehkörper (19) ausgebildet ist.

13. Gurtaufroller nach Anspruch 12, **dadurch gekennzeichnet, dass** der Drehkörper (19) in einer federelastischen Verbindungsstelle oder federelastischen Drehlagerung (7) gelagert ist.

14. Gurtaufroller nach einem der Ansprüche 6 oder 7, **dadurch gekennzeichnet, dass** die als ein- oder mehrteiliger Drehkörper ausgebildete schwingfähige Masse (5) mit einem Sonnenrad (17) des als Planetengetriebe ausgebildeten Getriebes (8) in Antriebsverbindung steht.

15. Gurtaufroller nach einem der Ansprüche 1 bis 14, **dadurch gekennzeichnet, dass** ein Freilauf (22) zwischen der als Drehkörper ausgebildeten schwingfähigen Masse (5) und der Wickelwelle (2) vorgesehen ist.

## Claims

1. A seat belt retractor with a winding shaft pivoted in a frame, with which a belt strap of the safety belt to be wound and unwound is connected, and an energy absorber connected or to be connected with the winding shaft (2), with which a belt strap extraction with energy absorption is achieved when a buckled up passenger is exposed to an excess acceleration or deceleration, wherein the energy absorber (4) is designed as an oscillating system (5, 6) exhibiting at least one oscillatable mass (5), whose at least one oscillatable mass (5) is drive-connected with the winding shaft (3) or must be drive-connected with the winding shaft (3) when a buckled up passenger is exposed to an elevated acceleration or deceleration, and that the oscillating system (5, 6) oscillates at near resonance or at resonance at a specific strap extraction speed, and
the oscillating system (5, 6) is arranged in a housing (10) attached to one side of the frame (1),
**characterized in that** a braking surface (12) for slowing the motion of the at least one oscillatable mass (5) is provided on the interior side of the housing (10).

2. The seat belt retractor according to claim 1, **characterized in that** the oscillatable mass (5) performs a roughly translational or rotational motion during the oscillations induced by driving the winding shaft.

3. The seat belt retractor according to one of claims 1 to 2, **characterized in that** a resilient restoring force (6) acts on the at least one oscillatable mass (5).

4. The seat belt retractor according to one of claims 1 to 3, **characterized in that** the at least one oscillatable mass (5) is designed as a single piece, and mounted so that it can oscillate in a resilient point of attachment (7) to the winding shaft (2) or a resilient bearing.

5. The seat belt retractor according to one of claims 1 to 4, **characterized in that** the oscillatable mass (5) consists of several bodies (15, 16, 20), which are resiliently supported against each other.

6. The seat belt retractor according to one of claims 1 to 5, **characterized in that** a transmission (8), in particular a transmission that gears up, is provided as the drive unit between the winding shaft (2) and the at least one oscillatable mass (5).

7. The seat belt retractor according to claim 6, **characterized in that** the transmission is designed as a gear transmission, in particular a planetary transmission, for the mass (5) executing an oscillating, rotational motion.

8. The seat belt retractor according to one of claims 1 to 7, **characterized in that** the oscillation of the at least one oscillatable mass (5) is dampened.

9. The seat belt retractor according to one of claims 1 to 8, **characterized in that** a brake (9) that acts on the oscillating motions of the oscillatable mass (5) is provided.

10. The seat belt retractor according to claim 6, **characterized in that** the oscillatable, rotational mass (5) consists of three mass sections, of which two exhibit a semicircular cross section, and resiliently abut against a turning part (20) arranged between them.

11. The seat belt retractor according to claim 10, **characterized in that** brake contact surfaces (12, 13) act on the semicircular peripheral surfaces of the abutting mass bodies (15, 16).

12. The seat belt retractor according to one of claims 1 to 11, **characterized in that** the oscillatable mass (5) is designed as a turning body, in particular as an unbalanced turning body (19).

13. The seat belt retractor according to claim 12, **characterized in that** the turning body (19) is mounted at a resilient point of attachment or resilient pivot bearing (7).

14. The seat belt retractor according to one of claims 6 or 7, **characterized in that** the oscillatable mass (5) designed as a turning body comprised of one or more parts is drive-connected with a sun gear (17) of the transmission (8) designed as a planetary transmission.

15. The seat belt retractor according to one of claims 1 to 14, **characterized in that** a freewheel (22) is provided between the oscillatable mass (5) designed as a turning body and the winding shaft (2).

## Revendications

1. Enrouleur de ceinture pour une ceinture de sécurité de véhicule, avec un arbre d'enroulement monté à rotation dans un bâti et auquel est reliée une sangle à enrouler et dérouler de la ceinture de sécurité, et avec un absorbeur d'énergie relié ou à relier à l'arbre d'enroulement (2) et par lequel, lors d'une accélération ou d'un freinage excessif agissant sur un occupant attaché du véhicule, on obtient un déploiement de la sangle avec absorption d'énergie, sachant que l'absorbeur d'énergie (4) est réalisé sous la forme d'un système vibrant (5, 6) présentant au moins une masse vibrante (5), système dont la masse vibrante au moins unique (5) se trouve en liaison d'entraînement avec l'arbre d'enroulement (2) afin de produire des vibrations forcées, ou doit être amenée en liaison d'entraînement lors d'une accélération ou d'un freinage excessif agissant sur un occupant attaché du véhicule, et sachant que le système vibrant (5, 6) vibre en résonance ou près de la résonance à une vitesse donnée de déploiement de la sangle,
et que le système vibrant (5, 6) est disposé dans un boîtier (10) qui est fixé sur un côté du bâti (1), **caractérisé en ce qu'**une surface de freinage (12) est prévue sur le côté intérieur du boîtier (10) pour freiner le mouvement de la masse vibrante au moins unique (5).

2. Enrouleur de ceinture selon la revendication 1, **caractérisé en ce que** la masse vibrante (5) accomplit un mouvement approximativement de translation ou de rotation lors des vibrations forcées par l'entraînement de l'arbre d'enroulement.

3. Enrouleur de ceinture selon la revendication 1 ou 2, **caractérisé en ce qu'**une force de rappel (6) à élasticité de ressort agit sur la masse vibrante au moins unique (5).

4. Enrouleur de ceinture selon l'une des revendications 1 à 3, **caractérisé en ce que** la masse vibrante au moins unique (5) est réalisée d'un seul tenant et montée à vibration en un point (7), à élasticité de ressort, de liaison avec l'arbre d'enroulement (2), ou dans un palier à élasticité de ressort.

5. Enrouleur de ceinture selon l'une des revendications 1 à 4, **caractérisé en ce que** la masse vibrante (5) est constituée de plusieurs corps (15, 16, 20) qui s'appuient les uns contre les autres à élasticité de ressort.

6. Enrouleur de ceinture selon l'une des revendications 1 à 5, **caractérisé en ce qu'**une transmission (8), en particulier une transmission multiplicatrice, est prévue comme liaison d'entraînement entre l'arbre d'enroulement (2) et la masse vibrante au moins unique (5).

7. Enrouleur de ceinture selon la revendication 6, **caractérisé en ce que** la transmission est réalisée sous forme de transmission par engrenage, en particulier d'engrenage planétaire, pour la masse (5) accomplissant un mouvement vibrant de rotation.

8. Enrouleur de ceinture selon l'une des revendications 1 à 7, **caractérisé en ce que** la vibration de la masse vibrante au moins unique (5) est amortie.

9. Enrouleur de ceinture selon l'une des revendications 1 à 8, **caractérisé en ce qu'**il est prévu un frein (9) agissant sur les mouvements vibrants de la masse vibrante (5) .

10. Enrouleur de ceinture selon la revendication 6, **caractérisé en ce que** la masse vibrante rotative (5) est constituée de trois éléments de masse dont deux présentent une section en forme de cercle partiel et sont soutenus élastiquement par rapport à un élément rotatif interposé (20).

11. Enrouleur de ceinture selon la revendication 10, **caractérisé en ce que** des surfaces de freinage (12, 13) agissent sur les surfaces périphériques en forme de cercle partiel des corps de masse soutenus (15, 16).

12. Enrouleur de ceinture selon l'une des revendications 1 à 11, **caractérisé en ce que** la masse vibrante (5) est réalisée sous la forme d'un corps de rotation, en particulier d'un corps de rotation à balourd (19).

13. Enrouleur de ceinture selon la revendication 12, **caractérisé en ce que** le corps de rotation (19) est monté en un point de liaison à élasticité de ressort ou dans un palier de rotation (7) à élasticité de ressort.

14. Enrouleur de ceinture selon la revendication 6 ou 7, **caractérisé en ce que** la masse vibrante (5) réalisée sous la forme d'un corps de rotation en une ou plusieurs parties se trouve en liaison d'entraînement avec une roue solaire (17) de la transmission (8) réalisée sous forme d'engrenage planétaire.

15. Enrouleur de ceinture selon l'une des revendications 1 à 14, **caractérisé en ce qu'**une roue libre (22) est prévue entre la masse vibrante (5) réalisée sous forme de corps de rotation et l'arbre d'enroulement (2).
